# EUROPÄISCHE PATENTSCHRIFT

(11) **EP 2 417 334 B1**
(45) Veröffentlichungstag und Bekanntmachung des Hinweises auf die Patenterteilung: **16.11.2016**
(21) Anmeldenummer: 10719237.9
(22) Anmeldetag: 08.04.2010
(51) Int. Cl.: F01M 11/12, B01D 35/027, F15B 1/26, F16N 7/00, F16N 19/00

(54) **ÖLBEHÄLTER MIT VERBESSERTER ABLESBARKEIT DES FÜLLSTANDS**
OIL CONTAINER WITH IMPROVED LEVEL VISUALIZATION
RÉCIPIENT D'HUILE AVEC VISUALISATION DU NIVEAU AMELIORÉE

(30) Priorität: 08.04.2009 DE 102009002275
(43) Veröffentlichungstag der Anmeldung: 15.02.2012
(73) Patentinhaber: Robert Bosch Automotive Steering GmbH, 73527 Schwäbisch Gmünd (DE)
(72) Erfinder: RENNER, Uwe, 49393 Lohne (DE); BURDIAK, Johannes, 73529 Schwäbisch Gmünd (DE)
(86) Internationale Anmeldenummer: PCT/DE2010/050016
(87) Internationale Veröffentlichungsnummer: WO 2010/115422

(56) Entgegenhaltungen:
- DE-C1- 3 718 357
- DE-U1- 7 729 352
- FR-A1- 2 242 581
- GB-A- 688 162
- GB-A- 936 817
- JP-A- 58 172 484

## Beschreibung

Die Erfindung betrifft einen Ölbehälter. Sie bezieht sich auf einen Ölbehälter, bei dem durch seine spezielle Ausbildungsform der jeweilige Füllstand eines von dem Ölbehälter aufgenommenen Ölvorrats einfacher feststellbar ist.

Zur Aufnahme eines Ölvorrats werden Ölbehälter in unterschiedlichen Baubeziehungsweise Ausbildungsformen verwendet. Je nach Einsatzfall werden die Ölbehälter beispielsweise bei maschinellen Anlagen oder aber auch bei Kraftfahrzeugen im Allgemeinen als Teil eines hydraulischen Systems in einen Ölkreislauf einbezogen. Hier dienen sie der Bevorratung der für die Funktionsfähigkeit des jeweiligen hydraulischen Systems, wie beispielsweise einer Lenkhydraulik, erforderlichen Ölmenge. Entsprechende Ölbehälter, die als Teil eines Hydrauliksystems ausgebildet sind, bestehen aus einem Behältergehäuse, an welchem zumindest ein Stutzen zur Ausbildung eines Ölzulaufs, ein Stutzen zur Ausbildung eines Ölablaufs beziehungsweise Ölauslasses und mindestens eine mittels eines Deckels verschließbare Gehäuseöffnung zur Befüllung des Ölbehälters angeordnet sind. Ferner ist an derartigen Ölbehältern mindestens eine Luftdurchtrittsöffnung ausgebildet, welche beim Zulaufen von Öl in den Behälter das Entweichen und beim Ablaufen von Öl aus dem Behälter das Einströmen von Luft ermöglicht. Gegebenenfalls ist darüber hinaus in den Ölbehälter ein Ölfilter zum Herausfiltern in dem Öl enthaltener Partikel angeordnet. Ein Ölbehälter entsprechender Ausbildung wird beispielsweise durch die DE 199 25 635 A1 beschrieben.

Nach dem Stand der Technik wird das Behältergehäuse entweder aus Metall oder aus Kunststoff gefertigt. Soweit die Fertigung aus Kunststoff erfolgt, bestehen die Behältergehäuse aus einem schwarzen oder einem naturfarbenen beziehungsweise umbrafarbenen Kunststoff. Bei Ölbehältern aus Metall oder aus schwarzem Kunststoff ist der jeweilige Ölfüllstand von außen nicht erkennbar. Daher sind entsprechende Ölbehälter zur Feststellung des Füllstandes entweder mit einem herausziehbaren

Ölmessstab beziehungsweise Peilstab, mit transparentem Steigrohr oder mit elektronischen Messsonden ausgestattet. DE 77 29 352 U1 offenbart einen derartigen Behälter Der Einsatz elektronischer

Messsonden beziehungsweise Sensoren ist jedoch vergleichsweise teuer. Die Verwendung eines zur Feststellung des Ölstands jeweils aus dem Ölbehälter herauszuziehenden Ölmessstabs ist hingegen wenig komfortabel. Letzteres macht sich beispielsweise für die Betreiber größerer Flotten von Kraftfahrzeugen im öffentlichen Nahverkehr nachteilig bemerkbar. So ist es bei den Busbetrieben Vorschrift, vor jedem Fahrtantritt die Ölbeziehungsweise Flüssigkeitsstände der Hydrauliksysteme der Fahrzeuge zu überprüfen. Dies ist, sofern die Feststellung des Füllstandes nur mit einem herausziehbaren Peil- beziehungsweise Ölmessstab möglich ist, bei einer entsprechend großen Zahl von Fahrzeugen sehr aufwändig.

Bei Ölbehältern aus naturfarbenen Kunststoffen schimmert hingegen die Farbe der für die Hydrauliksysteme jeweils verwendeten Öle leicht durch das Behältergehäuse hindurch, so dass es zumeist möglich ist, die Höhe des Füllstandes von außen visuell festzustellen. Allerdings zeigt sich bei derartigen Ölbehältern, insbesondere dann, wenn sie in Hydrauliksystemen eingesetzt werden, bei welchen das Öl im Betrieb etwas höhere Temperaturen erreicht, die Tendenz, dass sich der im Allgemeinen vorhandene Ölstand an den Behälterwänden "einbrennt". Hierdurch kommt es dann bei der visuellen Ablesung des Füllstandes zu Fehleinschätzungen, die im Einzelnen gefährliche Folgen haben können, da der Ölstand möglicherweise falls eingeschätzt wird.

Aufgabe der Erfindung ist es, eine preiswerte Lösung anzugeben, durch welche eine verbesserte beziehungsweise sichere und einfache Ablesbarkeit des Füllstandes bei Ölbehältern gewährleistet wird.

Die Aufgabe wird durch einen Ölbehälter mit den Merkmalen des Hauptanspruchs gelöst. Vorteilhafte Aus- beziehungsweise Weiterbildungen der Erfindung sind durch die Unteransprüche gegeben.

Der zur Lösung der Aufgabe vorgeschlagene Ölbehälter besteht, wie an sich bekannt, aus einem Behältergehäuse zur Aufnahme eines Ölvorrats. Das Behältergehäuse ist dabei aus einem Gehäuseunterteil und einem stoffschlüssig mit diesem Gehäuseunterteil verbundenen Gehäuseoberteil gebildet. Darüber hinaus weist das Behältergehäuse mindestens eine verschließbare Gehäuseöffnung zur Befüllung des Ölbehälters mit Öl auf. Zumindest das Gehäuseoberteil des Behältergehäuses besteht zudem aus Kunststoff. Erfindungsgemäß ist dabei dieses Gehäuseoberteil, abweichend vom Stand der Technik transparent ausgebildet. Als transparent wird eine Lichtdurchlässigkeit (Transmission) von mehr als 95% angesehen. Eine derart hohe Transmission wird mit den oben genannten Behältern aus herkömmlichen bzw. bislang verwendeten Kunststoffen nicht erreicht.

Zur Feststellung des Füllstands des von dem Ölbehälter aufgenommenen Ölvorrats ist der jeweilige Ölspiegel durch das transparente Material des Gehäuseoberteils hindurch - gegebenenfalls aus der Aufsicht auf den Ölbehälter - sichtbar, wobei die Höhe des Ölspiegels im Behältergehäuse mit zumindest einer Maßskala vergleichbar ist, welche an dem Behältergehäuse angebracht oder in dessen Innern so angeordnet ist, dass sie ebenfalls durch das transparente Gehäuseoberteil hindurch sichtbar ist.

Überraschenderweise hat es sich gezeigt, dass es möglich ist, für die Herstellung von Ölbehältern transparente Polyamide bereitzustellen, bei welchen sich Flüssigkeitsanteile des Öls nicht einlagern, so dass das von den naturfarbenen Kunststoffen bekannte "Einbrennen" des Füllstands ausbleibt. Unter Verwendung derartiger Materialien zumindest für das Gehäuseoberteil ist es möglich, sehr kostengünstige Ölbehälter zu fertigen, bei denen der Füllstand des Öls von außen gut ablesbar ist, so dass weder die Verwendung eher unkomfortabler, zur Messung herauszuziehender Peilstäbe noch der Einsatz teurer elektronischer Messsonden erforderlich ist.
Eine praxisgerechte Ausbildungsform des erfindungsgemäßen Ölbehälters ist zur Einbeziehung des Ölbehälters in den Ölkreislauf eines Hydrauliksystems ausgebildet. Dazu sind an dem Behältergehäuse Stutzen zur Ausbildung mindestens eines Ölzulaufs und mindestens eines Ölauslasses angeordnet und mindestens eine Luftdurchtrittsöffnung ausgebildet. Ferner weist bei dieser Ausbildungsform die Maßskala mindestens zwei Markierungen auf (oder besteht im einfachsten Fall mindestens aus zwei derartigen Markierungen), welche bezüglich der Gewährleistung der Funktion des betreffenden Hydrauliksystems zumindest einen minimalen sowie einen maximalen Füllstand für das von dem Ölbehälter aufzunehmende Öl angeben. Eine solche Ausbildungsform ist insbesondere für den Einsatz als Teil von Hydrauliksystemen von Kraftfahrzeugen vorgesehen.

Die Maßskala ist gemäß einer bevorzugten Ausbildungsform der Erfindung in Form eines bedruckten Etiketts ausgebildet. Anbringung und Gestaltung des Etiketts können dabei derart sein, dass das Etikett auf der Außenseite einer im bestimmungsgemäßen Einbauzustand des Ölbehälters vorderen Gehäusewand des Behältergehäuses angebracht und auf seiner der betreffenden Gehäusewand abgewandten Seite bedruckt ist. Sofern es aufgrund der Anordnung des Ölbehälters im bestimmungsgemäßen Einbauzustand nicht möglich ist, den Füllstand durch visuelle Kontrolle von der Seite zu ermitteln, sondern hierzu die Aufsicht von schräg oben erforderlich ist, kann jedoch auch eine andere Gestaltung und Anbringung des Etiketts vorteilhaft sein. Diese besteht darin, dass das Etikett auf der Außenseite einer im bestimmungsgemäßen Einbauzustand des Ölbehälters hinteren Gehäusewand des Behältergehäuses und durch dessen Gehäuseoberteil hindurch sichtbar angebracht ist und dass das Etikett auf seiner, der betreffenden Gehäusewand zugewandten Seite bedruckt ist. Hierbei ist die der Ermittlung des Füllstands dienende Maßskala demnach durch das Behältergehäuse hindurch sichtbar. Durch diese Art der Anbringung wird im Falle dessen, dass die Kontrolle des Ölstands nur durch eine schräge Aufsicht auf den Ölbehälter möglich ist, die Gefahr von Parallaxefehlern reduziert.

Entsprechend einer vorteilhaften Ausbildungsform ist der erfindungsgemäße Ölbehälter derart gestaltet, dass hinsichtlich der Höhe seines für die Aufnahme des Öls zur Verfügung stehenden Innenvolumens die Aufteilung des Behältergehäuses in das Gehäuseunterteil und das transparente Gehäuseoberteil so gewählt ist, dass die den minimalen Füllstand angebende Markierung der mindestens einen Maßskala oberhalb der Verbindung von Gehäuseunterteil und Gehäuseoberteil angeordnet ist. Das heißt, der die Markierung für den minimalen Ölstand aufweisende Teil der Maßskala ist demnach an dem Gehäuseoberteil angeordnet oder, sofern sich die Maßskala (beispielsweise in Form eines zwar im Innern des Ölbehälters angeordneten, aber durch das Gehäuseoberteil hindurch sichtbaren Ölmessstabs) im Innern des Behältergehäuses befindet, oberhalb einer gedachten, durch den Ölbehälter verlaufenden Ebene angeordnet, welche die Wände des Behältergehäuses jeweils im Verbindungsbereich von Gehäuseunterteil und Gehäuseoberteil durchstößt.

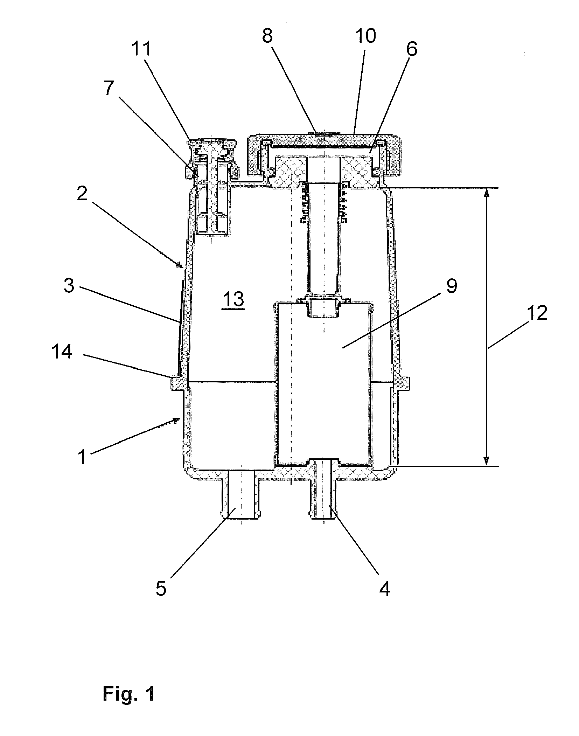

Wie grundsätzlich aus dem Stand der Technik bekannt, kann der Ölbehälter noch dadurch weitergebildet sein, dass in dem Behältergehäuse mindestens ein Ölfilter als integraler Bestandteil des Ölbehälters angeordnet ist. In diesem Falle ist der mindestens eine Stutzen für den Ölzulauf unterhalb des mindestens einen Ölfilters angeordnet, so dass aus dem Ölkreislauf in den Ölbehälter eintretendes Öl bei seinem Eintritt zunächst den Ölfilter passiert. Vorteilhafterweise weist ein Ölbehälter dieser Art zudem eine mit einem Deckel verschließbare Öffnung zur vorübergehenden Entnahme des mindestens einen Ölfilters auf. Die vorzusehende Luftdurchtrittsöffnung ist dabei vorzugsweise in dem Deckel für die vorgenannte Öffnung ausgebildet.
Eine mögliche Ausbildungsform eines erfindungsgemäßen Ölbehälters ist in der Fig. 1 dargestellt.

Die Figur zeigt den Ölbehälter in einer Schnittdarstellung. Der beispielhaft gezeigte Ölbehälter besteht aus einem Behältergehäuse 1; 2 zur Aufnahme des Ölvorrats, in welchem ein Ölfilter 9 als integraler Bestandteil des Ölbehälters angeordnet ist. Das Behältergehäuse 1; 2, welches durch ein Gehäuseunterteil 1 und ein mit diesem Gehäuseunterteil 1 durch eine Schweißverbindung 14 verbundenes Gehäuseoberteil 2 gebildet ist, weist eine Mehrzahl von Stutzen auf. Mittels der zwei am Gehäuseunterteil 1 angeordneten Stutzen, welche einen unter dem integrierten Ölfilter 9 angeordneten Ölzulauf 4 und einen Ölauslass 5 ausbilden, kann der Ölbehälter in den Ölkreislauf eines Hydrauliksystems eingefügt werden. Bei dem Gehäuseunterteil 1 und dem Gehäuseoberteil 2 handelt es sich um Spritzgussteile aus Kunststoff. Dem Grundgedanken der Erfindung folgend, besteht dabei das Gehäuseoberteil 2 aus einem transparenten Polyamid. An einer Seitenwand des Gehäuseoberteils 2 ist ein Aufkleber angebracht, auf welchen eine Maßskala 3 aufgedruckt ist, die Markierungen für einen zur Gewährleistung der Funktion des betreffenden Hydrauliksystems minimalen Füllstand und für einen maximalen Füllstand des von dem Ölbehälter aufgenommenen Öls aufweist. Aufgrund der transparenten Ausbildung des Gehäuseoberteils 2 ist es im Wege einer visuellen Kontrolle jederzeit möglich, mit einem Blick auf die Maßskala 3 den durch das Gehäuseoberteil 2 hindurch sichtbaren Füllstand mit den Angaben für die minimale und die maximale Füllhöhe zu vergleichen und somit zu überprüfen, ob sich die Ölmenge innerhalb der für die Sicherstellung der Funktion des hydraulischen Systems vorgeschriebenen Grenzen bewegt. Sofern dies nicht gegeben ist, kann Öl über die jeweils mit einem Deckel 10, 11 verschließbaren Öffnungen 6, 7 nachgefüllt werden. Dabei dient die Öffnung 6 gleichzeitig zur vorübergehenden Entnahme des Ölfilters 9, um diesen zu reinigen oder zu ersetzen. In den Deckel 10 ist die Luftdurchtrittsöffnung 8 eingebracht.

Wie aus der Fig. 1 ersichtlich, ist die Aufteilung des Behältergehäuses 1; 2 bezüglich der Höhe 12 seines zur Aufnahme des Ölvorrats zur Verfügung stehenden Innenvolumens 13 derart gewählt, dass das Etikett mit der Maßskala 3 vollständig, zumindest aber die Markierung für den minimalen Ölstand auf dem transparenten Gehäuseoberteil 2 angeordnet ist. Bei den beschriebenen Gehäuseober- und unterteilen handelt es sich nicht um deren Deckel. Der Deckel ist ein separates Bauteil, das eine Gehäuseöffnung z.B. des Gehäuseoberteils zum Befüllen mit Flüssigkeit verschließt.

### Bezugszeichenliste

- 1; 2: Behältergehäuse
1 Gehäuseunterteil
2 Gehäuseoberteil
- 3: Maßskala
- 4: Ölzulauf
- 5: Ölauslass
- 6, 7: Gehäuseöffnung
- 8: Luftdurchtrittsöffnung
- 9: Ölfilter
- 10, 11: Deckel
- 12: Höhe
- 13: Innenvolumen
- 14: Verbindung

## Patentansprüche

1. Ölbehälter mit einem Behältergehäuse (1; 2) zur Aufnahme eines Ölvorrats, welches aus einem Gehäuseunterteil (1) und einem stoffschlüssig mit dem Gehäuseunterteil (1) verbundenen Gehäuseoberteil (2) gebildet ist und mindestens eine verschließbare Gehäuseöffnung (6, 7) zur Befüllung des Ölbehälters mit Öl aufweist, wobei zumindest das Gehäuseoberteil (2) des Behältergehäuses (1; 2) aus einem Kunststoff besteht, **dadurch gekennzeichnet, dass** das Gehäuseoberteil (2) transparent ist, so dass zur Feststellung des Füllstands des von dem Ölbehälter aufgenommenen Ölvorrats der jeweilige Ölspiegel durch das transparente Material des Gehäuseoberteils (2) hindurch sichtbar und dessen Höhe im Behältergehäuse (1; 2) mit zumindest einer an dem Behältergehäuse (1; 2) angebrachten oder mit zumindest einer im Innern des Behältergehäuses (1;2) angeordneten, durch das Gehäuseoberteil (2) hindurch sichtbaren Maßskala (3) vergleichbar ist, die zur Feststellung des Füllstands in Form eines bedruckten Etiketts an dem Behältergehäuse (1; 2) angebracht ist.

2. Ölbehälter nach Anspruch 1, **dadurch gekennzeichnet, dass** an dem Behältergehäuse (1; 2) Stutzen zur Ausbildung mindestens eines Ölzulaufs (4) und mindestens eines Ölauslasses (5) zur Einbeziehung des Ölbehälters in einen Ölkreislauf eines Hydrauliksystems und mindestens eine Luftdurchtrittsöffnung (8) ausgebildet sind und dass die Maßskala (3) zumindest zwei Markierungen aufweist, welche bezüglich der Gewährleistung der Funktion des Hydrauliksystems einen minimalen sowie einen maximalen Füllstand für den Ölbehälter kennzeichnen.

3. Ölbehälter nach Anspruch 1 oder 2, **dadurch gekennzeichnet, dass** das Gehäuseoberteil (2) mit dem Gehäuseunterteil (1) durch eine Schweißverbindung (14) verbunden ist.

4. Ölbehälter nach einem der vorangehenden Ansprüche, **dadurch gekennzeichnet, dass** das Etikett auf der Außenseite einer im bestimmungsgemäßen Einbauzustand des Ölbehälters vorderen Gehäusewand des Behältergehäuses (1; 2) angebracht und auf seiner, der betreffenden Gehäusewand abgewandten Seite bedruckt ist.

5. Ölbehälter nach einem der vorangehenden Ansprüche, **dadurch gekennzeichnet, dass** das Etikett auf der Außenseite einer im bestimmungsgemäßen Einbauzustand des Ölbehälters hinteren Gehäusewand des Behältergehäuses (1; 2) und durch dessen Gehäuseoberteil (2) hindurch sichtbar angebracht ist und dass das Etikett auf seiner, der betreffenden Gehäusewand zugewandten Seite bedruckt ist.

6. Ölbehälter nach einem der Ansprüche 2 bis 5, **dadurch gekennzeichnet, dass** hinsichtlich der Höhe (12) des für die Aufnahme des Öls zur Verfügung stehenden Innenvolumens (13) des Ölbehälters die Aufteilung des Behältergehäuses (1; 2) in Gehäuseunterteil (1) und transparentes Gehäuseoberteil (2) derart ist, dass die den minimalen Füllstand angebende Markierung der Maßskala (3) oberhalb der Verbindung (14) von Gehäuseunterteil (1) und Gehäuseoberteil (2) angeordnet.

7. Ölbehälter nach einem der Ansprüche 2 bis 6, **dadurch gekennzeichnet, dass** in dem Behältergehäuse (1; 2) mindestens ein Ölfilter (9) als integraler Bestandteil des Ölbehälters angeordnet ist.

8. Ölbehälter nach Anspruch 7, **dadurch gekennzeichnet, dass** der mindestens eine Stutzen für den Ölzulauf (4) unterhalb des mindestens einen Ölfilters (9) angeordnet ist, so dass aus dem Ölkreislauf in den Ölbehälter eintretendes Öl bei seinem Eintritt zunächst den Ölfilter (9) passiert.

9. Ölbehälter nach Anspruch 7 oder 8, **dadurch gekennzeichnet, dass** dieser mindestens eine mit einem Deckel (10) verschließbare Öffnung (6) zur vorübergehenden Entnahme des mindestens einen Ölfilters (9) aufweist, wobei die mindestens eine Luftdurchtrittsöffnung (8) in dem Deckel (10) ausgebildet ist.

10. Ölbehälter nach einem der vorangehenden Ansprüche, **dadurch gekennzeichnet, dass** das Gehäuseoberteil (2) aus einem transparenten Polyamid besteht.

## Claims

1. Oil container with a container housing (1; 2) for accommodating an oil supply, which container housing (1; 2) is formed from a housing lower part (1) and a housing upper part (2) connected in a materially joined fashion to the housing lower part (1), and has at least one closeable housing opening (6, 7) for filling the oil container with oil, wherein at least the housing upper part (2) of the container housing (1; 2) is composed of a plastic, **characterized in that** the housing upper part (2) is transparent, with the result that, in order to determine the filling level of the oil supply which is accommodated by the oil container, the respective level of the oil can be seen through the transparent material of the housing upper part (2) and the position of said level in the container housing (1; 2) can be compared with at least one measurement scale (3) which is attached to the container housing (1; 2) or which is arranged in the interior in the container housing (1; 2) can be seen through the housing upper part (2) and is attached, in the form of a printed label, to the container housing (1; 2) in order to determine the filling level.

2. Oil container according to Claim 1, **characterized in that** necks for forming at least one oil inflow (4) and at least one oil outlet (5) for including the oil container in an oil circuit of a hydraulic system and at least one air passage opening (8) are formed on the container housing (1; 2), and **in that** the measuring scale (3) has at least two marks which characterize a minimum and a maximum filling level for the oil container with respect to ensuring the function of the hydraulic system.

3. Oil container according to Claim 1 or 2, **characterized in that** the housing upper part (2) is connected to the housing lower part (1) by means of a welded connection (14).

4. Oil container according to one of the preceding claims, **characterized in that** the label is attached to the outside of a housing wall of the container housing (1; 2), which is at the front in the correct installation state of the oil container, and has printing on its side facing away from the respective housing wall.

5. Oil container according to one of the preceding claims, **characterized in that** the label is printed on the outside of a housing wall of the container housing (1; 2) which is at the rear in the correct installation state of the oil container, and is attached so as to be visible through the housing upper part (2) of said container housing (1; 2), and **in that** the label has printing on its side facing the respective housing wall.

6. Oil container according to one of Claims 2 to 5, **characterized in that** the division of the container housing (1; 2) into the housing lower part (1) and transparent housing upper part (2) is effected with respect to the position (12) of the low volume (13) of the oil container which is available to accommodate the oil, such that the marking of the measurement scale (3) which indicates the minimum filling level is arranged above the connection (14) of the housing lower part (1) and housing upper part (2).

7. Oil container according to one of Claims 2 to 6, **characterized in that** at least one oil filter (9) is arranged in the container housing (1; 2) as an integral component of the oil container.

8. Oil container according to Claim 7, **characterized in that** the at least one neck for the oil inflow (4) is arranged below the at least one oil filter (9), with the result that oil entering the oil filter from the oil circuit initially passes through the oil filter (9) as it enters.

9. Oil container according to Claim 7 or 8, **characterized in that** the latter has at least one opening (6) which can be closed with a lid (10) and which has the purpose of temporarily removing the at least one oil filter (9), wherein the at least one air passage opening (8) is formed in the lid (10).

10. Oil container according to one of the preceding claims, **characterized in that** the housing upper part (2) is composed of a transparent polyamide.

## Revendications

1. Récipient d'huile comprenant un boîtier de récipient (1 ; 2) pour recevoir une réserve d'huile, qui est formé d'une partie inférieure de boîtier (1) et d'une partie supérieure de boîtier (2) connectée par liaison de matière à la partie inférieure de boîtier (1) et qui présente au moins une ouverture de boîtier refermable (6, 7) pour le remplissage du récipient d'huile avec de l'huile, au moins la partie supérieure de boîtier (2) du boîtier de récipient (1 ; 2) se composant de plastique, **caractérisé en ce que** la partie supérieure de boîtier (2) est transparente de telle sorte que pour établir le niveau de remplissage de la réserve d'huile reçue par le récipient d'huile, le niveau d'huile respectif peut être vu à travers le matériau transparent de la partie supérieure de boîtier (2) et sa hauteur dans le boîtier de récipient (1 ; 2) pouvant être comparée avec au moins une échelle de mesure (3) appliquée sur le boîtier de récipient (1 ; 2) ou avec au moins une échelle de mesure (3) disposée à l'intérieur du boîtier de récipient (1 ; 2), visible à travers la partie supérieure de boîtier (2), qui est appliquée sur le boîtier de récipient (1 ; 2) pour établir le niveau de remplissage sous forme d'une étiquette imprimée.

2. Récipient d'huile selon la revendication 1, **caractérisé en ce que** des tubulures pour réaliser au moins une amenée d'huile (4) et au moins une sortie d'huile (5) pour incorporer le récipient d'huile dans un circuit d'huile d'un système hydraulique et au moins une ouverture de passage d'air (8) sont réalisées au niveau du boîtier de récipient (1 ; 2) et **en ce que** l'échelle de mesure (3) présente au moins deux marquages qui, pour assurer la fonction du système hydraulique, caractérisent un niveau de remplissage minimal et maximal pour le récipient d'huile.

3. Récipient d'huile selon la revendication 1 ou 2, **caractérisé en ce que** la partie supérieure de boîtier (2) est connectée à la partie inférieure de boîtier (1) par une connexion soudée (14).

4. Récipient d'huile selon l'une quelconque des revendications précédentes, **caractérisé en ce que** l'étiquette est appliquée sur le côté extérieur d'une paroi avant de boîtier du boîtier de récipient (1 ; 2) dans l'état installé de manière conforme du récipient d'huile, et est imprimée sur son côté opposé à la paroi de boîtier concernée.

5. Récipient d'huile selon l'une quelconque des revendications précédentes, **caractérisé en ce que** l'étiquette est appliquée sur le côté extérieur d'une paroi arrière de boîtier du boîtier de récipient (1 ; 2) dans l'état installé de manière conforme du récipient d'huile et de manière visible à travers sa partie supérieure de boîtier (2) et **en ce que** l'étiquette est imprimée sur son côté tourné vers la paroi de boîtier concernée.

6. Récipient d'huile selon l'une quelconque des revendications 2 à 5, **caractérisé en ce qu'**en rapport avec la hauteur (12) du volume intérieur (13) du récipient d'huile disponible pour recevoir l'huile, la division du boîtier de récipient (1 ; 2) en la partie inférieure de boîtier (1) et la partie supérieure transparente de boîtier (2) est telle que le marquage de l'échelle de mesure (3) indiquant le niveau de remplissage minimal soit disposé au-dessus de la connexion (14) de la partie inférieure de boîtier (1) et de la partie supérieure de boîtier (2).

7. Récipient d'huile selon l'une quelconque des revendications 2 à 6, **caractérisé en ce qu'**au moins un filtre à huile (9) est disposé dans le boîtier de récipient (1 ; 2) en tant que constituant intégral du récipient d'huile.

8. Récipient d'huile selon la revendication 7, **caractérisé en ce que** l'au moins une tubulure pour l'amenée d'huile (4) est disposée sous l'au moins un filtre à huile (9) de telle sorte que l'huile entrant dans le récipient d'huile depuis le circuit d'huile passe d'abord par le filtre à huile (9) lors de son entrée.

9. Récipient d'huile selon la revendication 7 ou 8, **caractérisé en ce que** celui-ci présente au moins une ouverture (6) pouvant être fermée avec un couvercle (10) pour enlever temporairement l'au moins un filtre à huile (9), l'au moins une ouverture de passage d'air (8) étant réalisée dans le couvercle (10).

10. Récipient d'huile selon l'une quelconque des revendications précédentes, **caractérisé en ce que** la partie supérieure de boîtier (2) se compose d'un polyamide transparent.
